# EUROPEAN PATENT SPECIFICATION

(11) **EP 3 896 773 B1**
(45) Date of publication and mention of the grant of the patent: **09.12.2026**
(21) Application number: 20169591.3
(22) Date of filing: 15.04.2020
(51) Int. Cl.: H01M 10/42, G08C 23/04, H04B 10/11, H04B 10/80

(54) **CONTROL SYSTEM FOR A BATTERY SYSTEM**
STEUERUNGSSYSTEM FÜR EIN BATTERIESYSTEM
SYSTÈME DE COMMANDE POUR SYSTÈME DE BATTERIE

(43) Date of publication of application: 20.10.2021
(73) Proprietor: Samsung SDI Co., Ltd., Gyeonggi-do 17084 (KR)
(72) Inventor: HOFER, Maximilian, 8230 Hartberg (AT); KLOBASA, Roland, 8051 Graz (AT); GERNOT, Kraberger, 8010 Graz (AT)
(74) Representative: Gulde & Partner

(56) References cited:
- EP-A2- 2 858 210
- US-A1- 2019 229 376

## Description

### Field of the Invention

The present invention relates to a control system for battery system, particularly to a control system performing a light-based communication between a master control unit and at least one slave control unit. The present invention further relates to a battery system with the control system of the present invention. The present invention further relates to a method for wake-up of at least one slave control unit of the control system of the present invention.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric vehicles and the like.

In general, rechargeable batteries include an electrode assembly including a positive electrode, a negative electrode, and a separator interposed between the positive and negative electrodes, a case receiving the electrode assembly, and electrode terminals electrically connected to the positive and negative electrodes of the electrode assembly, respectively. An electrolyte solution is injected into the case in order to enable charging and discharging of the battery via an electrochemical reaction of the positive electrode, the negative electrode, and the electrolyte solution. The shape of the case, e.g. cylindrical or prismatic, depends on the battery's intended purpose.

Rechargeable batteries may be used as a battery module formed of a plurality of unit battery cells coupled in series and/or in parallel so as to provide a high energy density, particularly high voltage and capacity, e.g. for an electric vehicle. That is, the battery module is formed by interconnecting the electrode terminals of the plurality of unit battery cells depending on a required amount of power and in order to realize a high-power rechargeable battery, e.g. for an electric vehicle. Battery modules are mechanically and electrically integrated, equipped with a passive or active thermal management system and set up for communication with electrical loads in order to form a battery system. Aspects of mechanical and electric integration and thermal management are not essential for the present disclosure.

Battery modules can be constructed either in block design or in modular design. In block designs, each battery cell is coupled to a common current collector structure and a common battery system manager. In modular designs, pluralities of battery cells are connected to form submodules and several submodules are connected to form the battery module. Battery management functions may be realized either on module or submodule level and thus interchangeability of the components is improved. One or more battery modules are mechanically and electrically integrated, equipped with a thermal management system and set up for communication with one or more electrical consumers to form a battery system.

For meeting the dynamic power demands of the various electrical loads connected to the battery system, a static control of battery power output and charging is not sufficient. Thus, steady or intermittent exchange of information between the battery system and the controllers of the electrical consumers is required. This information includes the battery systems actual state of charge (SoC), potential electrical performance, charging ability and internal resistance as well as actual or predicted power demands or surpluses of the consumers.

For monitoring, controlling and/or setting of the aforementioned parameters a battery system usually comprises one or more of a battery system monitor (BSM), a battery disconnect unit (BDU), and a battery module monitor (BMM). Such control units may be an integral part of the battery system and disposed within a common housing or may be part of a remote control unit communicating with the battery system via a suitable communication bus. In the context of this disclosure, a BSM may also be called a Battery System Manager and a BMM may also be called a Battery Module Manager.

These control units may perform various functions in the battery system. A BMM is equipped on battery module or submodule level and is configured for measuring cell voltages and temperatures and to provide cell balancing within the modules. A plurality of BMMs is usually connected for data transmission among each other and with a BSM, wherein the BMS receives the measured data, particularly voltage data from all battery modules, controls the battery system as a whole, and provides a communication interface to an exterior of the battery system for communicating with the electrical consumers, e.g. via a suitable communication bus such as a CAN or SPI interface.

The BSM is usually coupled to the controller of one or more electrical consumers as well as to each of the BMMs of the battery modules of the battery system. For controlling a plurality of battery modules by a single BSM a daisy chain setup may be used. In such setup, the BSM, as master, is connected for communication in series to a plurality of battery modules, particularly to the plurality of battery module monitors, BMM, of the battery modules, as slaves. Daisy chain setups and corresponding protocols are commonly used in the art.

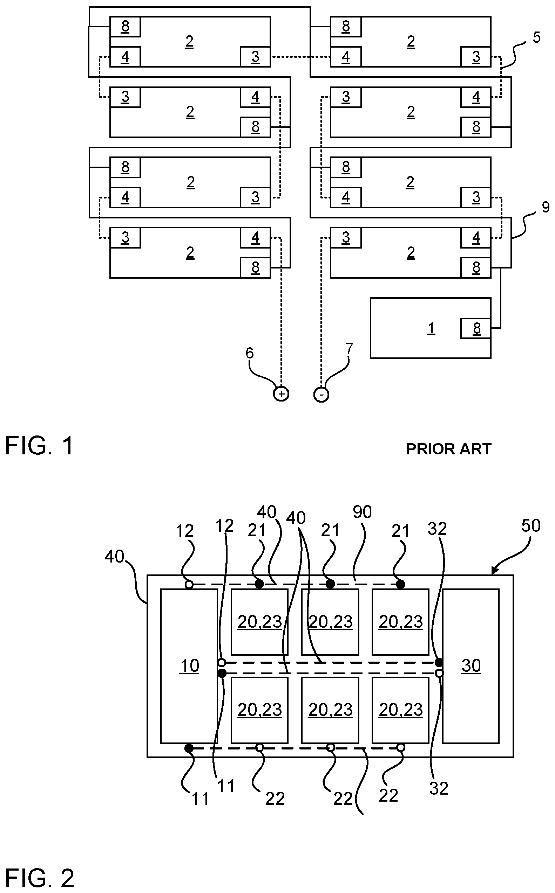

An exemplary battery system with a daisy chain setup according to the prior art is illustrated in Figure 1. Therein, a BSM 1 is setup for communication with a plurality of BMMs 2 of battery modules, each battery module comprising a negative module terminal 3 and a positive module terminal 4 that are connected to the respective BMM 2 for supplying the BMM 2. The module terminals 3, 4 are power connected to each other via busbars 5 and peripheral module terminals 3, 4 are power connected to system terminals 6, 7, respectively. Each BMM 2 comprises a connector 8 for setting up a daisy chain with the BSM 1 which also comprises such connector 8 using a wiring harness 9 connecting the all of the connectors 8 with each other in a serial configuration.

While using the wiring harness 9, the wire-based connections are disadvantageously subject to failure by electro-magnetic disturbances and further are sources for EM disturbances themselves. Hence, screening or EMI shielding of the wiring hamess 9 is required further limiting the already restricted available construction space for the wiring harness 9. Also, the ohmic resistance of the wiring harness leads to undesired heating and power losses and further the material and assembly costs of the wire harness increase the overall costs.

For the above reasons, light-based communication can be principally used in a battery system in an advantageous manner. However, in utilizing light-based communication the problem of wake-up of the BMMs 2 operated as the slave control units occur. In the wire-based state of the art control system as of Figure 1, a wake-up can be performed over the communication lines, wherein a wake-up energy is transmitted from the master (BMS) to the slaves (BMMs) via the wiring harness 9. However, in optical communications, particularly in optical communications using infrared light of low energy content, such wake-up process may lead to an erroneous wake-up operation. However, keeping BMMs 2 active all time, at least with respect to their wake-up circuits, would contribute significantly to the power consumption of the battery system while the battery system is usually not charged in sleep mode, hence disadvantageously leading to a decreased lifetime of the battery system as a whole.

It is thus an object of the present invention to overcome or reduce at least some of the drawbacks of the prior art and to provide a control system for a battery system utilizing light-based communication that allows for a wake-up process and reduced energy consumption. Prior art documents EP 2 858 210 and US 2019/229376 disclose battery systems with master-slave architecture and optical communication.

### Description of the Invention

One or more of the drawbacks of the prior art could be avoided or at least reduced by means of the present disclosure. In particular, a control system for a battery system is provided comprises a master control unit and at least one slave control unit that are configured to perform light-based communication with each other. Therein, the master control unit and the at least one slave control unit may have different functions in the battery system. Exemplarily, the master control unit may be a BSM or BMS and the at least one slave control unit may be one of a BMM, BDU, or cell supervision circuit, CSC.

According to the present disclosure, the master control unit comprises a light source and a transmission controller. Therein, the light source might be a light-emitting diode, a light-bulb, a laser source, or the like. The transmission controller is preferably configured to selectively operate the light source for transmitting a transmission signal via at least one light signal output by the light source. Preferably, the transmission control is configured to encode the transmission signal and to modulate the encoded transmission signal to a light signal.

The at least one slave control unit of the control system of the present disclosure comprises a photo-sensitive element that is configured to receive light signals emitted by the light source. During normal operation of the slave control unit, the photo-sensitive element is configured to output a reception signal to a receiver circuit of the slave control unit based on a light signal. The receiver circuit is configured for further processing of the reception signal, wherein such further compressing may comprise demodulating and decoding of the reception signal. The photo-sensitive element is preferably one of a photo-diode and a photo-transistor.

The present disclosure aims at foremost to the operation of the slave control circuit during a sleep mode (idle mode), wherein a power consumption of the save control circuit shall be low. Particularly, the present disclosure is directed to the transition between the sleep mode of the slave control unit and the normal operation mode of the slave control unit. Therefore, in the context of the present disclosure, the description of the slave control unit is focused on those aspects that are important for such transition between a sleep and a normal operation mode. In this respect, the photo-sensitive element of the slave control unit is configured to output a wake-up signal to a wake-up unit in response to receiving a wake-up light (signal) emitted from the light source of the master control unit, particularly while receiving such a light signal during sleep mode of the slave control unit. The wake-up unit of the slave control unit is configured to connect the receiver circuit to at least one of a power supply node of the slave control unit and the photo-sensitive element in response to receiving the wake-up signal. In other words, the wake-up unit is configured to selectively connect the receiver circuit to its power supply and/or to the photo-sensitive element in response to the wake-up signal, wherein in sleep mode, the receiver circuit is not connected to at least one of those elements.

The power supply node is configured to supply an operation power, e.g., an operation voltage, for the receiver circuit to the receiver circuit when electrically connected thereto. Further, the photo-sensitive element is configured to transmit reception signals to the receiver circuit for further processing when electrically connected thereto. In other words, when the receiver circuit is connected to both of the power supply node and the photo-sensitive element, the receiver circuit is able to perform in a normal operation mode. Whether or not the wake-up unit selectively connects one or both of the power supply node and the photo-sensitive element to the receiver circuit depends on whether one or both of those elements is disconnected from the receiver circuit during sleep mode of the slave control unit. In other words, if both of those elements are disconnected in sleep mode, the wake-up unit connects both of those elements to the receiver circuit in response to the wake-up signal. Otherwise, the wake-up unit connects the disconnected element in response to the wake-up signal.

The slave control circuit of the present invention advantageously allows for decoupling the processing of reception signals in the receiver circuit and the transition from a sleep mode to a normal operation mode by providing a separate wake-up unit that is capable of selectively bringing the receiver circuit into its normal operation mode based on a low energy wake-up signal. In other words, in designing the receiver circuit any constrains resulting from such wake-up operation must not be considered, e.g. while dimensioning circuit components.

Further, by separating the wake-up function from the normal operation mode, no power supply at all is required for the receiver circuit during sleep mode. Further, the wake-up unit is preferably configured to selectively connect the power supply node and/or the photo-sensitive element to the receiver circuit in response to receiving a low-energy wake-up light signal.

In a preferred embodiment of the control system of the present disclosure, the wake-up unit comprises a switch element and a latching element. Therein, the photo-sensitive element is configured to output a set signal as the wake-up signal to the latching element in response to receiving the wake-up light signal. Further, the latching element is configured to control the switch element to be conductive in response to receiving the set signal from the photo-sensitive element. Therefore, the latching element outputs a switch control signal, wherein outputting of the switch control signal starts with receiving the set signal and is continued, i.e., latched, until receiving a reset signal. Further preferably, the switch element is interconnected between the receiver circuit and one of the photo-sensitive element and the power supply node. Further preferred, the other one of the photo-sensitive element and the power supply node is fixedly connected to the receiver circuit, i.e., remains connected thereto irrespective of an operation mode. In this disclosure, the switch element may be a first switch element.

Further preferred, the power supply node is connected to the receiver circuit via a DCDC converter that is configured to receive a supply voltage from the power supply node and to convert the supply voltage to an operation voltage of the receiver circuit and to output the operation voltage to the receiver circuit. According to this embodiment, the photo-sensitive element is further connected to the latching element via the DCDC converter. In other words, the DCDC converter is configured, in response to receiving the wake-up signal from the photo-sensitive element, to output the set signal to the latching element. Particularly preferred, the DCDC converter is a low drop-out regulator that advantageously allows performing both of the aforementioned tasks, while having minimal power consumption.

According to a further preferred embodiment of the control system, the wake-up unit further comprises another (second) switch element that is interconnected between the power supply node and the DCDC converter. In this embodiment, the photo-sensitive element is configured to set the another (second) switch element conductive in response to receiving the wake-up light signal. In other words, the energy content of the wake-up light signal advantageously must solely be enough to set the another (second) switch element conductive in order to provide the operation power from the power supply node to the DCDC converter. According to this embodiment, the DCDC converter then outputs the set signal to the latching element, while the DCDC converter is connected to the power supply node via the (second) another switch element. In response thereto, the latching element outputs the switch control signal for setting the (first) switch element conductive for continuously power supplying the DCDC until a reset signal is received by the latching element to stop outputting the switch control signal.

Further preferred, the switch element is interconnected between the power supply node and the DCDC converter and the DCDC converter is configured to output the operation voltage to the receiver circuit, while being connected to the power supply node via the (first) switch element. In other words, a configuration of the DCDC converter might be such that it outputs a voltage to the receiver circuit only if it is connected to the power supply node via the (first) switch element but not while being connected to the power supply node only via the (second) another switch element. This might be achieved by using different input nodes of the DCDC converter, e.g., wherein different input nodes are connected to different output nodes. Preferably, a first input node is connected to the power supply node via the (first) switch element and a corresponding first output node is connected to the receiver circuit. Further, a second input node may be connected to the power supply node via the (second) switch element and a corresponding second output node may be connected to the latching element.

Further preferred, the reset signal for the latching element of the wake-up unit functions as the sleep signal for the slave control unit. According to this embodiment, the (first) switch element is configured to disconnect the receiver circuit from at least one of the power supply node and the photo-sensitive element in response to receiving the sleep signal. In other words, the conductivity of the (first) switch element is fully controlled by the latching element. Particularly preferred, the latching element sets the (first) switch element conductive in response to receiving a set signal and non-conductive in response to receiving a reset signal. In a preferred embodiment, the reset signal is generated from the receiver circuit, e.g., after a predetermined time without receiving any reception signal from the photo-sensitive element.

In a further preferred embodiment, the control system of the present disclosure comprises a counter that is configured to start counting in response to the wake-up signal and to stop counting in response to a predetermined reception signal. In other words, the counter is connected to the wake-up unit either directly or indirectly for receiving the wake-up signal. Preferably, the counter is connected to the photo-sensitive element via the DCDC converter. Hence, when the DCDC converter supplies the operation voltage to the receiver circuit in response to the wake-up signal, the counter starts counting. In other words, the counter is preferably configured to start counting in response to that the (first) switch element is set conductive in response to receiving the switch control signal from the latching element. Also preferred, the predetermined reception signal is generated by the photo-sensitive element in response to receiving a predetermined light signal from the master control unit, wherein such predetermined light signal is transmitted by the MCU for stopping the counter to count.

Particularly preferred, the control system of the present disclosure further comprises a capacitor that is connected to the power supply node and wherein the photo-sensitive element is configured to set the another switch element conductive in response to receiving the wake-up light signal and in response to that the capacitor is fully charged, i.e., to that both of the aforementioned conditions are met. Particularly preferred, when the photo-sensitive element receives the wake-up light signal, first the capacitor is charged and only if the capacitor is charged, the another (second) switch element is set conductive for connecting the power supply node to the DCDC converter for generating the set signal for the latching element. Therein, the time for charging the capacitor of a given capacity preferably depends on the intensity of the light received by the photo-sensitive element. Hence, the combination of counter and capacitor advantageously allows for measuring the intensity of the wake-up light signal received by the photo-sensitive element. Preferably, all slave control units of the control system comprise such capacitor of identic capacity and receive the same wake-up light signal. Then, the counter value is indicative of a relative location, particularly a distance and/or obstructions between, of the master control unit and the respective slave control unit. A method for wake-up of at least one slave control unit of the control system that utilizes the advantageous effects of the counter and the capacitor is described in more detail below.

Another aspect of the present invention relates to a battery system, comprising a plurality of battery modules each having a plurality of stacked battery cells and a battery module monitor, BMM, for monitoring the battery cells of the plurality of battery cells that are preferably interconnected between module terminals. Particularly, each of the BMMs is configured for measuring voltages, currents and/or temperatures of the cells of the respective battery module and may further be configured to perform cell balancing between the battery cells of the battery modules. In the context of the present disclosure, this definition of a battery module may be complete, i.e., a battery module described here may be a battery submodule as described in the introduction. However, the battery module described here may also comprise further components.

The battery system further comprises a battery system monitor, BSM, which is configured for controlling the BMM of each battery. The BMS is preferably configured to receive voltage data from the BMMs of all battery modules and further to control the battery system as a whole. The BSM is preferably further configured to provide a communication interface to an exterior of the battery system for communicating with electrical loads connected thereto. The battery system further comprises a control system according to the present disclosure, wherein the BSM being the master control unit and the BMMs being the slave control units. In other words, the battery system does not comprise a master control unit and a BSM but the BSM is the master control unit in the control system of the disclosure. Preferred embodiments of the battery system correspond to the preferred embodiments of the control system of the present disclosure as described in detail above.

The method of the present disclosure further relates to a method for wake-up of at least one slave control unit of the control system according to the present disclosure, particularly to a method for wake-up of at least one slave control unit comprising a counter described above. Therein, the method of the present disclosure at least comprises the steps of receiving, via the photo-sensitive element, a first light signal from the light source and generating, in response to receiving the first light signal, a wake-up signal. In other words, the first light signal preferably is the wake-up light signal as described with respect to the control system. The method further comprises the step of starting, by the counter, to count in response to the wake-up signal and further comprises the step of connecting, by the wake-up unit, the receiver circuit to the power supply node and/or or the photo-sensitive element in response to the wake-up signal. The method further comprises the step of stopping, by the counter, to count in response to a predetermined reception signal that is output from the photo-sensitive element to the receiver circuit, wherein the predetermined reception signal is generated in response to receiving, via the photo-sensitive element, a second light signal. The method of the present disclosure advantageously allows to determined a time between the generation of the wake-up signal in response to receiving the wake-up light signal and a second light signal, wherein the second light signal is a light signal for stopping the counting operation. The method of the present disclosure advantageously allows addressing of the SCUs.

In a preferred embodiment of the method of the present disclosure, each of a plurality of slave control units comprises a capacitor as described above. In this embodiment, the first light signal (wake-up light signal) is preferably transmitted at a first time point and for a first duration. In each of the slave control units the wake-up signal is output at a second time point during the first duration, the second time point being the time point when the capacitor of the respective slave control unit is fully charged. In other words, in each slave control unit the time point of outputting the wake-up signal depends on the energy content of the received first (wake-up) light signal. According to this embodiment, the second light signal is transmitted at a third time point after the first duration, e.g., after the transmission of the first (wake-up) light signal has stopped. According to this embodiment, a second duration between the first time point and the second time point advantageously depends on a distance of the slave control unit to the master control unit, as the intensity of the transmitted first (wake-up) light decreases with increasing distance between MCU and SCU. Further preferred, in this embodiment an identifier of the respective slave control unit is then determined based on the second duration, wherein such identifier is preferably unique.

Another aspect of the present disclosure relates to an electric vehicle, comprising a battery system according to the present disclosure as described above. Further aspects of the present invention could be learned from the dependent claims or the following description. The electric vehicle may be a fully electric vehicle or a hybrid vehicle.

### Brief Description of the Drawings

Features will become apparent to those of ordinary skill in the art by describing in detail exemplary embodiments with reference to the attached drawings in which:
- Fig. 1: illustrates a schematic top view of a battery system according to the prior art;
- Fig. 2: illustrates a schematic top view of a battery system according to an embodiment;
- Fig. 3: illustrates a control system for a battery module according to an embodiment;
- Fig. 4: illustrates a control system for a battery module according to an embodiment;
- Fig. 5: (A), (B) schematically illustrate slave control units for battery module according to embodiments;
- Fig. 6: illustrates a circuit diagram for a slave control unit according to an embodiment.
- Fig. 7: illustrates a circuit diagram for a slave control unit according to an embodiment;
- Fig. 8: illustrates a wake-up method according to an embodiment; and
- Fig. 9: illustrates a wake-up and addressing method according to an embodiment.

### Detailed Description of the Drawings

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques that are not considered necessary to those having ordinary skill in the art for a complete understanding of the features of the present invention may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise. Expressions such as "at least one of," when preceding a list of elements, modify the entire list of elements and do not modify the individual elements of the list. It will be understood that although the terms "first" and "second" are used to describe various elements, these elements should not be limited by these terms. These terms are only used to distinguish one element from another element. For example, a first element may be named a second element and, similarly, a second element may be named a first element, without departing from the invention.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that can be expressed as a numerical value, the term "substantially" denotes a range of +/- 5%.

Fig.1 shows a daisy chain setup according to the prior art and was already described above.

Referring to Fig. 2, a schematic top view of a battery system 50 according to an embodiment is shown. The battery system 50 comprises a plurality of six battery modules 23 that each comprise a battery module monitor, BMM 20, which are disposed on top of each battery module 23. The battery system 50 further comprises a battery system monitor, BSM 10, and a battery disconnect unit, BDU 30. The battery modules, BMM 20, BSM 10 and BDU 30 are disposed in a housing 40 that is at least laterally enclosing all of these components.

As can be further seen in Fig. 2, the BSM 10 comprises two optical transmitters 11 and two optical receivers 12. Therein, as shown in Fig. 2 one optical transmitter 11 is arranged at a lower lateral side of the BSM 10 and is configured to perform a forward communication with the plurality of BMMs 20 at a lower row of battery modules 23. Therefore, each BMM 20 comprises an optical receiver 22 that is in direct line of sight with said optical transmitter 11 of the BSM 10. As further shown in Fig. 2, an optical receiver 12 is arranged at an upper lateral side of the BSM 10 and is configured to perform a backward communication with the plurality of BMMs 20 at an upper row of battery modules 23. Therein, each BMM 20 comprises an optical transmitter 21 that is in direct line of sight with said optical receiver 12 of the BSM 10. As further shown in Fig. 2, the BSM 10 comprises another optical transmitter 11 and another optical receiver 12 that are disposed at a right lateral side of the BSM 10 and that are in direct line of sight with respective optical receiver 32 and optical transmitter 31 of a BDU 30. Further optical receivers exist for backward communication with the lower row of BMMs 20 and further optical transmitters exist for forward communication with the upper row of BMMs although these optical transmitters 21 and optical receivers 22 are not shown in Fig. 2.

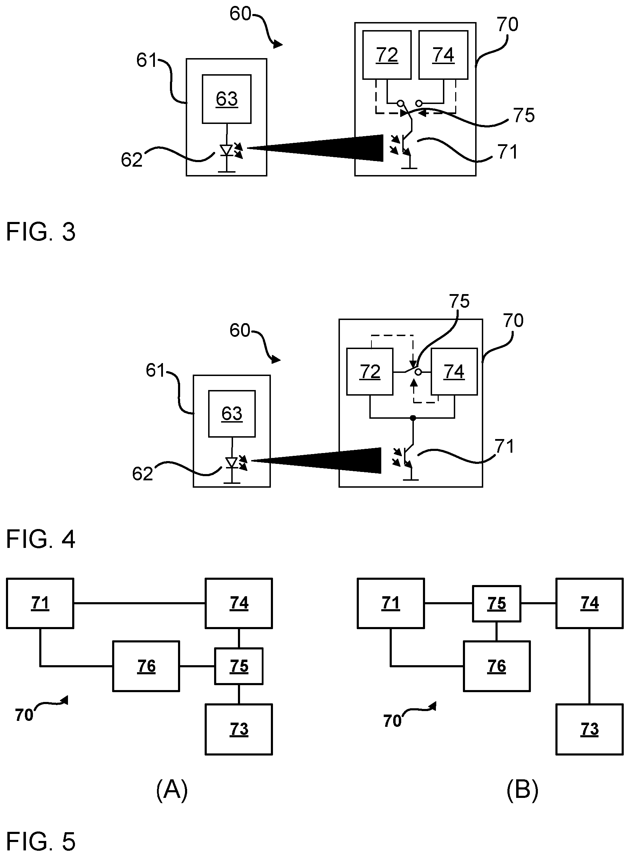

A control system 60 according to an embodiment for a battery module 23 as of Fig. 2 is illustrated in Fig. 3. As illustrated therein, the control system 60 comprises a master control unit, MCU 61, which comprises a light emitting diode 62 as light source 62 and a transmission controller 63 that is configured for selectively operating the light source 62, i.e., for setting on and off the light source for transmitting a light signal, wherein a transmission signal is encoded and/or modulated to the light signal and is thus transmitted via the light signal.

The control system 60 further comprises at least one slave control unit, SCU, 70, preferably a plurality thereof, wherein Fig. 3 exemplarily shows a single SCU 70. The SCU 70 comprises a photo-sensitive transistor 71 as a photo-sensitive element 71. The photo-sensitive element 71 is configured to receive the light signal transmitted from the MCU 61. The SCU 70 further comprises a wake-up unit 72, a receiver circuit 74 and a switch element 75.

During a sleep mode of the SCU, the switch element 75 is connected to the wake-up unit 72 and is disconnected from the receiver circuit 74. In response to receiving a light signal from the MCU 61, particularly a wake-up light signal, the photo-sensitive element 71 outputs a wake-up signal to the wake-up unit 72 via the switch element 75. In response to receiving the wake-up signal, the wake-up unit 72 operates the switch element 75 so as to connect the photo-sensitive element 71 to the receiver circuit 74 instead of the wake-up unit 72(as indicated by the left dashed line in Fig. 3). Therein, the wake-up unit provides a transition between a sleep mode and a normal operation mode. In the normal operation mode, the receiver circuit 74 receives a reception signal output by the photo-sensitive element 71 in response to receiving further light signals from the MCU 61 and the receiver circuit 74 is configured to demodulate and/or decode such reception signals. In order to transition back to the sleep mode, the receiver circuit 74 can control the switch element 75 to control the photo-sensitive element 71 to the wake-up unit 72 again (as indicated by the right dashed line in Fig. 3). In Fig. 3, the receiver circuit 74 is fixedly connected to a power supply node (not shown).

Another embodiment of the control system 60 for a battery module 23 as of Fig. 2 is illustrated in Fig. 4. Therein, same reference signs denote same elements and repeated descriptions thereof are omitted. In the control system 60 of Fig. 4, the receiver circuit 74 and the wake-up unit 72 are fixedly connected to the photo-sensitive element 71. Further, the wake-up unit 72 comprises a power supply node (not shown). In a sleep mode of the SCU 70, a switch element 75 between the wake-up unit 72 and the receiver circuit 74 is set non-conductive. Hence, no operation voltage is supplied to the receiver circuit 74 that is thus not in an operational state. However, in response to receiving a wake-up signal from the photo-sensitive element 71 (generated therefrom in response to receiving a wake-up light signal from the MCU 61), the wake-up unit 72 sets the switch element 75 conductive (as indicated by the left dashed line in Fig. 4) and the power supply node (not shown) as part of the wake-up unit 72 is connected to the receiver circuit 74, which is thus provided with an operational voltage and hence functional. In response to a sleep signal output by the receiver circuit 74 (as indicated by the right dashed line in Fig. 4), the switch element 75 is set non-conductive again and hence the receiver circuit 74 is again cut from the power supply node.

Further embodiments of slave control units 70 are schematically illustrated in Fig. 5, wherein the slave control unit 70 comprises the photo-sensitive element 71, the power supply node 73, the wake-up unit formed by a switch element 75 and latching element 76 and the receiver circuit 74. According to Fig. 5(A), the switch element 75 is interconnected between the power supply node 73 and the receiver circuit 74, as already described with respect to Fig. 4. Further, the switch element 75 is controlled by latching element 76, which receives the wake-up signal from the photo-sensitive element 71 as described above. In response to receiving the wake-up signal, the latching element 76 sets the switch element 75 to be conductive and the power supply node 73 is connected to the receiver circuit 74. Hence, the receiver circuit 74 is connected to the power supply node 73 and to the photo-sensitive element 71 and receives an operation voltage from the power supply node 73 and receives reception signals from the photo-sensitive element 71 and is thus in normal operation mode. In response to receiving a sleep signal as reset signal (not shown), the latching element 76 sets the switch element 75 non-conductive, thus disconnecting the receiver circuit 74 and the power supply node 73 and putting the receiver circuit 74 and thus the SCU 70 to sleep mode.

In Fig. 5(B), the switch element 75 is interconnected between the photo-sensitive element 71 and the receiver circuit 74, as already described with respect to Fig. 3. Again, the switch element 75 is controlled by latching element 76, which receives the wake-up signal from the photo-sensitive element 71 as described above. In response to receiving the wake-up signal, the latching element 76 sets the switch element 75 to be conductive and the photo-sensitive element 71 is connected to the receiver circuit 74. Hence, the receiver circuit 74 is connected to the power supply node 73 and to the photo-sensitive element 71 and receives an operation voltage from the power supply node 73 and receives reception signals from the photo-sensitive element 71 and is thus in normal operation mode. In response to receiving a sleep signal as reset signal (not shown), the latching element 76 sets the switch element 75 non-conductive, thus disconnecting the receiver circuit 74 and the photo-sensitive element 71 and putting the receiver circuit 74 and thus the slave control unit as whole 70 to sleep mode.

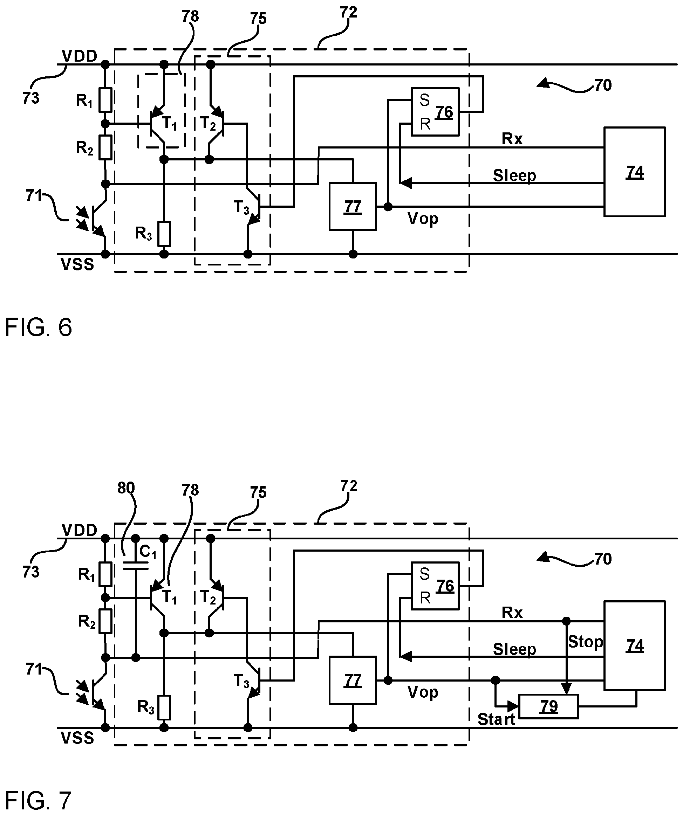

A circuit diagram of a slave control unit 70 according to an embodiment is illustrated in Fig. 6. Therein, the switch element 75 is interconnected between power supply node 73 and receiver circuit 74 and thus the circuit diagram corresponds to the embodiment of Fig. 5(A). According to Fig. 6, a wake-up unit 72 comprises a (first) switch element 75, a latching element 76, a DCDC converter 77 and another (second) switch element 78. The photo-sensitive element 71 is a photo-sensitive transistor 71 interconnected between a ground voltage VSS and a power supply node 73 providing supply voltage VDD. A voltage divider formed by resistors R1 and R2 is interconnected between a drain of photo-sensitive transistor 71 and power supply node 73 and an output of voltage divider R1/R2 is provided to the gate of transistor 78 as the another (second) switch element 78 interconnected between the power supply node 73 and the DCDC converter 77. When the photo-sensitive transistor 71 receives the wake-up light signal, the photo-sensitive transistor 71 sets the (second) switch element 78 to be conductive. Hence, the supply voltage VDD is provided to a first input of the DCDC converter 77 and the DCDC converter 77 outputs a set signal to latching element 76 in response. The latching element 76 thus outputs a switch control signal to first switch element 75 formed by transistors T2 and T3, particularly to transistor T3, which in response sets transistor T2 to be conductive. Via transistor T2, the supply voltage VDD is provided to an input of the DCDC converter 77, which therefore outputs an operation voltage V_{OP} to the receiver circuit 74. The receiver circuit 74 further receives a reception signal Rx from the photo-sensitive transistor 71 and is thus in normal operation mode. For transitioning to sleep mode, the receiver circuit 74 outputs a sleep signal as a reset signal to latching element 76 which thus stops outputting the switch control signal to the third transistor T3. Hence, supply voltage VDD is no longer provided to DCDC converter 77 and operation voltage V_{OP} is no longer provided to receiver circuit 74.

A similar circuit diagram of a slave control unit 70 according to an embodiment is schematically illustrated in Fig. 7. Therein, same reference signs denote same elements as in Fig. 6 and repeated descriptions thereof are omitted. The SCU 70 of Fig. 7 further comprises a counter 79 that is interconnected between the DCDC converter 77 and the receiver circuit 74 so as to receive a start signal when the DCDC converter 77 starts to provide the operation voltage V_{OP} to the receiver circuit 74. The counter 79 is further interconnected between the photo-sensitive transistor 71 and the receiver circuit 74 so as to receive a stop signal, when the photo-sensitive transistor 71 outputs a predetermined reception signal Rx to the receiver circuit 74. The counter 79 is further connected to the receiver circuit 74 for providing a counting result to the receiver circuit 74. The SCU 70 of Fig. 7 further comprises a capacitor 80 interconnected between the photo-sensitive transistor 71 and the power supply node 73.

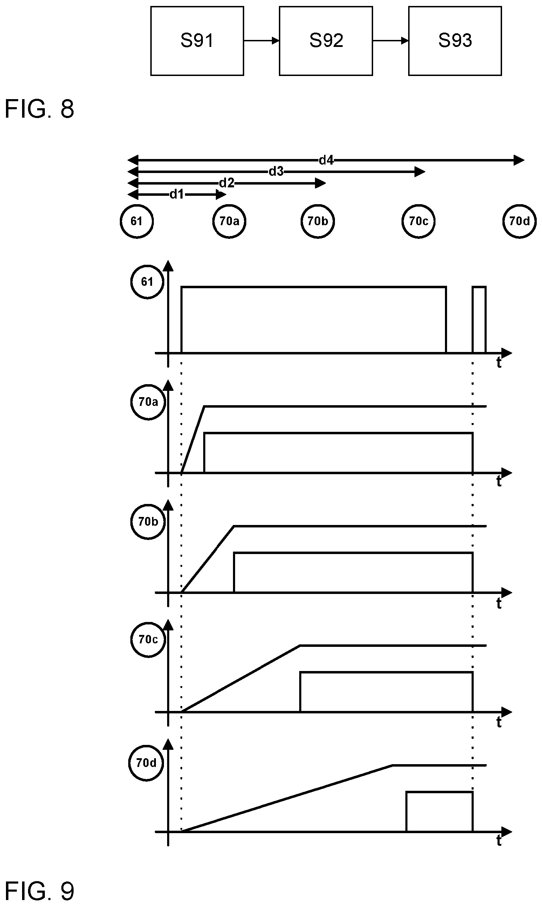

A wake-up method of a slave control unit 70 as illustrated in Fig. 7 is illustrated with respect to Figs. 8 and 9. The wake-up method is performed in a control system 60 as schematically illustrated in the top part of Fig. 9 and comprising one master control unit 61 and four slave control units 70a, 70b, 70c, 70d, wherein the first SCU 70a is positioned with a distance d1 to the MCU 61, the second SCU 70b is positioned with a distance d2 to the MCU 61, the third SCU 70c is positioned with a distance d3 to the MCU 61, and the fourth SCU 70d is positioned with a distance d4 to the MCU 61 and distance d1 is smaller than distance d2, distance d2 is smaller than distance d3, and distance d3 is smaller than distance d4.

In a first step S91 of the wake-up method, a first wake-up light signal is emitted by the MCU 61 at a first time point and for a first duration as a square wave signal as illustrated in the uppermost plot of Fig. 9. As illustrated by the left dotted line, the first light signal emitted is received by the photo-sensitive elements 71 of all SCUs 70a to 70d. As illustrated in Fig. 7, when the first wake-up light signal is received by photo-sensitive element 71, the capacitor 80 is charged by power supply node 73 and only after the capacitor 80 is charged, the another (second) switch element 78 is set conductive providing the supply voltage VDD to the DCDC converter 77. Hence, in each slave control unit 70a to 70d, the wake-up signal is output at a different second time point during the first duration when the capacitor 80 of the respective slave control unit 70a to 70d is fully charged. This is illustrated in the plots regarding SCUs 70a to 70d in Fig. 9 as the time point when the increasing slope reaches a plateau (capacitor 80 fully charged) and when the respective wake-up signal is generated.

In response to the respective wake-up signals being generated, the counter 79 of the respective SCU 70a to 70d starts counting in step S922, which is illustrated as square wave signals in Fig. 9 for each of the SCUs 70a to 70d. Therein, the counter 79 runs for the longest time for SCU 70a being the closest to MCU 61 and the counter 79 runs for the shortest time for SCU 70a being the most distant to MCU 61. At the same time, when the wake-up signal is generated, i.e., when the increasing slope reaches a plateau (capacitor 80 fully charged) the wake-up unit connects the receiver circuit 74 to the power supply node 73 via the first switch element 75 operated by latching element 76 receiving a set signal from DCDC converter 77. Hence, the receiver circuits 74 of the SCUs 70a to 70d are in normal operation mode.

As further illustrated in the plot of Fig. 9 regarding MCU 61, the MCU 61 outputs a second light signal at a third time point after the first duration. As further illustrated in the plots of Fig. 9 regarding the SCUs 70a to 70d, the counter 79 is stopped in step S93 in response to that the receiver circuit 74 receives a predetermined reception signal that is output from the photo-sensitive element 71 to the receiver circuit 74 in response to receiving, via the photo-sensitive element 71, the second light signal. Further, in this moment, the counter 79 value corresponding to the integral of the square wave signal in the respective plots of SCUs 70a to 70d in Fig. 9 is transmitted from the counter 79 to the receiver circuit 74.

In the example of Fig. 9, the distance d1 equals 30cm, the distance d2 equals 60cm, the distance d3 equals 90 cm and the distance d4 equals 120cm. The energy of the first wake-up light signal received by the respective SCUs 70a to 70d depends reciprocally on the distance and hence the current through photo-sensitive transistor 71 in SCU 70a exceeds the current through photo-sensitive transistor 71 in SCU 70b, 70c, and 70d, etc. Hence, the wake-up signal is generated the earliest in SCU 70a and hence the counter value takes the highest value, such as 21 for SCU 70a, 18 for SCU 70b, 11 for SCU 70c, and 6 for SCU 70d. These counter values correspond, for each of the SCUs 70a to 70d, to a second duration between the first time point and the second time point and to the distance between the respective SCU 70a to 70d and the MCU 61. In a preferred embodiment, an identifier of the SCUs 70a to 70d is determined based on the second duration, i.e., based on the counter value. Therefore, the counter values are preferably transmitted from the SCUs 70 a to 70d to the MCU 61 and the MCU 61 assigns individual identifiers to the SCUs 70a to 70d based on the counter values.

In following communications, the MCU 61 transmits the identifier and the underlying counter value to identify the SCU 70a to 70d to which a certain communication is directed. Then, the SCUs 70a to 70d compare the counter value received from the MCU 61 with the internal counter value, which is either stored or generated during a subsequent wake-up. If the counter values are matching, the SCUs 70a to 70d store the respective identifier transmitted by the MCU 61 together with the counter value as their own address for further communication. In order to ensure that addressing remains valid even for upcoming wake-ups, the counter values may have an uncertainty interval, wherein the counter values are assigned to the same identifier and hence variations in photon-flux etc. can be accounted for.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the disclosure.

### Reference signs

- 1: battery system monitor, BSM (prior art)
- 2: battery module monitor, BMM (prior art)
- 3: negative module terminal (prior art)
- 4: positive module terminal (prior art)
- 5: busbar (prior art)
- 6: positive battery system terminal (prior art)
- 7: negative battery system terminal (prior art)
- 8: connector (prior art)
- 9: wiring harness (prior art)

- 10: battery system monitor, BSM
- 11: optical transmitter of BSM
- 12: optical receiver of BSM
- 20: battery module monitor, BMM
- 21: optical transmitter of BMM
- 22: first/second optical receiver of BMM
- 23: battery module
- 30: battery disconnect unit, BDU
- 31: optical transmitter of BDU
- 32: optical receiver of BDU
- 40: battery system housing
- 50: battery system

- 60: control system
- 61: master control unit
- 62: light source
- 63: transmission controller
- 70: slave control unit
- 71: photo-sensitive element
- 72: wake-up unit
- 73: power supply node
- 74: receiver circuit
- 75: (first) switch element
- 76: latching element
- 77: DCDC converter
- 78: another (second) switch element
- 79: counter
- 80: capacitor

## Claims

1. Control system (60) for a battery system (50), comprising a master control unit (61) and at least one slave control unit (70) configured to perform light-based communication with each other, wherein:
the master control unit (61) comprises a light source (62) and a transmission controller (63), the transmission controller being configured to:
encode a transmission signal, to transmit the transmission signal by modulating it to at least one light signal and to operate the light source (62) to emitted the at least one light signal, and
control the light source (62) for transmitting a wake-up signal via a wake-up light signal, and
the at least one slave control unit (70) comprises a photo-sensitive element (71), a wake-up unit (72), a power supply node (73), and a receiver circuit (74),
wherein during a normal operation mode the receiver circuit (74) is connected to the photo-sensitive element (71) and the power supply node (73) and wherein during a sleep mode the receiver circuit (74) is disconnected from at least one of the photo-sensitive element (71) and the power supply node (73),
wherein the photo-sensitive element (71) is configured to receive light signals emitted by the light source (62) and to output a wake-up signal to the wake-up unit (72) in response to receiving the wake-up light signal and to output a reception signal to the receiver circuit (74) in response to receiving the at least one light signal,
wherein the wake-up unit (72), in response to receiving the wake-up signal, is configured to connect the receiver circuit (74) to the disconnected at least one of the power supply node (73) and to the photo-sensitive element (71) in order to transition from the sleep mode to the normal operation mode, and
wherein the receiver circuit (74), in the normal operation mode, is configured to receive an operation voltage from the power supply node (73) and to receive the reception signal from the photo-sensitive element (71) and to demodulate and decode the reception signal.

2. Control system (60) according to claim 1, wherein the wake-up unit (72) comprises a switch element (75) and a latching element (76),
wherein the photo-sensitive element (71) is configured to output a set signal as wake-up signal to the latching element (76) in response to receiving the wake-up light signal,
wherein the latching element (76) is configured to control the switch element (75) to be conductive in response to receiving the set signal from the photo-sensitive element (71), and
wherein the switch element (75) is interconnected between the receiver circuit (74) and one of the photo-sensitive element (71) and the power supply node (73).

3. Control system (60) according to claim 2, wherein the other one of the photo-sensitive element (71) and the power supply node (73) is fixedly connected to the receiver circuit (74).

4. Control system (60) according to claim 2 or 3, wherein the power supply node (73) is connected to the receiver circuit (74) via a DCDC converter (77) and the photo-sensitive element (71) is connected to the latching element (76) via the DCDC converter (77).

5. Control system (60) according to claim 4,
wherein the wake-up unit (72) comprises another switch element (78) interconnected between the power supply node (73) and the DCDC converter (77),
wherein the photo-sensitive element (71) is configured to set the another switch element (78) conductive in response to receiving the wake-up light signal, and
wherein the DCDC converter (77) is configured to output the set signal to the latching element (76), while being connected to the power supply node (73).

6. Control system (60) according to claim 5, wherein the switch element (75) is interconnected between the power supply node (73) and the DCDC converter (77) and wherein the DCDC converter (77) is configured to output the operation voltage to the receiver circuit (74).

7. Control system (60) according to any one of the claims 2 to 6, wherein a reset signal for the latching element (76) is a sleep signal, and wherein the switch element (75) is configured to disconnect the receiver circuit (74) from the power supply node (73) or from the photo-sensitive element (71) in response to receiving the sleep signal.

8. Control system (60) according to claim 7, wherein the reset signal is generated from the receiver circuit (74).

9. Control system (60) according to any one of the preceding claims, further comprising a counter (79) configured to start counting in response to the wake-up signal and to stop counting in response to a predetermined reception signal.

10. Control system (60) according to claims 5 and 9, wherein the counter (79) is configured to start counting in response to the switch element (75) being set conductive.

11. Control system (60) according to claim 10, further comprising a capacitor (80), connected to the power supply node (73), wherein the photo-sensitive element (71) is configured to set the another switch element (78) conductive in response to receiving the wake-up light signal and the capacitor (80) being fully charged.

12. Battery system (50), comprising,
a plurality of battery modules (23), each comprising a plurality of stacked battery cells and a battery module monitor, BMM (20), for monitoring the cells;
a battery system monitor, BSM (10), configured for controlling the BMM (20) of each battery module (23); and
a control system (60) according to any one of the claims 1 to 9, with the BSM (10) as the master control unit (61) and the BMMs (20) as the slave control units (70).

13. Method for wake-up of at least one slave control unit (70) of the control system (60) according to claim 9, the method comprising the steps of:
receiving (S91), via the photo-sensitive element (71), a wake-up light signal from the light source (62) and generating, in response to receiving the wake-up light signal, a wake-up signal;
in response to the wake-up signal starting (S92), by the counter (79), counting and connecting (S92), by the wake-up unit (72), the receiver circuit (74) to the power supply node (73) and/or the photo-sensitive element (71);
stopping (S93), by the counter (79), counting in response to a predetermined reception signal output from the photo-sensitive element (71) to the receiver circuit (74) in response to receiving, via the photo-sensitive element (71), a light signal different from the wake-up light signal.

14. Method according to claim 13 for wake-up of a plurality of slave control units (70) of the control system (60) of claim 11,
wherein the first light signal is transmitted at first time point for a first duration,
wherein, in each slave control unit (70), the wake-up signal is output at a second time point during the first duration when the capacitor (80) of the respective slave control unit (70) is fully charged, and
wherein the second light signal is transmitted at a third time point after the first duration.

15. Method according to claim 14, wherein, for each slave control unit (70), a second duration between the first time point and the second time point depends on a distance of the slave control unit (70) to the master control unit (61) and an identifier of the slave control unit (70) is determined based on the second duration.

## Patentansprüche

1. Steuerungssystem (60) für ein Batteriesystem (50), umfassend eine Master-Steuereinheit (61) und mindestens eine Slave-Steuereinheit (70), die dazu konfiguriert sind, miteinander eine lichtbasierte Kommunikation durchzuführen, wobei:
die Master-Steuereinheit (61) eine Lichtquelle (62) und eine Übertragungssteuerung (63) umfasst, wobei die Übertragungssteuerung dazu konfiguriert ist:
ein Übertragungssignal zu codieren, um das Übertragungssignal zu übertragen, indem es auf mindestens ein Lichtsignal moduliert wird, und die Lichtquelle (62) so zu betreiben, dass sie das mindestens eine Lichtsignal emittiert, und
die Lichtquelle (62) zum Übertragen eines Aufwecksignals über ein Aufwecklichtsignal zu steuern, und
die mindestens eine Slave-Steuereinheit (70) ein lichtempfindliches Element (71), eine Aufweckeinheit (72), einen Leistungsversorgungsknoten (73) und eine Empfängerschaltung (74) umfasst,
wobei während eines Normalbetriebsmodus die Empfängerschaltung (74) mit dem lichtempfindlichen Element (71) und dem Leistungsversorgungsknoten (73) verbunden ist und wobei während eines Schlafmodus die Empfängerschaltung (74) von mindestens einem von dem lichtempfindlichen Element (71) und dem Leistungsversorgungsknoten (73) getrennt ist,
wobei das lichtempfindliche Element (71) dazu konfiguriert ist, von der Lichtquelle (62) emittierte Lichtsignale zu empfangen und als Reaktion auf das Empfangen des Aufwecklichtsignals ein Aufwecksignal an die Aufweckeinheit (72) auszugeben und als Reaktion auf das Empfangen des mindestens einen Lichtsignals ein Empfangssignal an die Empfängerschaltung (74) auszugeben,
wobei die Aufweckeinheit (72) als Reaktion auf das Empfangen des Aufwecksignals dazu konfiguriert ist, die Empfängerschaltung (74) mit dem getrennten mindestens einen von dem Leistungsversorgungsknoten (73) und dem lichtempfindlichen Element (71) zu verbinden, um von dem Schlafmodus in den Normalbetriebsmodus überzugehen, und
wobei die Empfängerschaltung (74) im Normalbetriebsmodus dazu konfiguriert ist, eine Betriebsspannung von dem Leistungsversorgungsknoten (73) zu empfangen und das Empfangssignal von dem lichtempfindlichen Element (71) zu empfangen und das Empfangssignal zu demodulieren und zu decodieren.

2. Steuerungssystem (60) nach Anspruch 1, wobei die Aufweckeinheit (72) ein Schaltelement (75) und ein Halteelement (76) umfasst,
wobei das lichtempfindliche Element (71) dazu konfiguriert ist, als Reaktion auf das Empfangen des Aufwecklichtsignals ein Setzsignal als Aufwecksignal an das Halteelement (76) auszugeben,
wobei das Halteelement (76) dazu konfiguriert ist, als Reaktion auf das Empfangen des Setzsignals von dem lichtempfindlichen Element (71) das Schaltelement (75) so zu steuern, dass es leitend ist, und
wobei das Schaltelement (75) zwischen die Empfängerschaltung (74) und eines von dem lichtempfindlichen Element (71) und dem Leistungsversorgungsknoten (73) geschaltet ist.

3. Steuerungssystem (60) nach Anspruch 2, wobei das andere von dem lichtempfindlichen Element (71) und dem Leistungsversorgungsknoten (73) fest mit der Empfängerschaltung (74) verbunden ist.

4. Steuerungssystem (60) nach Anspruch 2 oder 3, wobei der Leistungsversorgungsknoten (73) über einen DCDC-Wandler (77) mit der Empfängerschaltung (74) verbunden ist und das lichtempfindliche Element (71) über den DCDC-Wandler (77) mit dem Halteelement (76) verbunden ist.

5. Steuerungssystem (60) nach Anspruch 4,
wobei die Aufweckeinheit (72) ein weiteres Schaltelement (78) umfasst, das zwischen den Leistungsversorgungsknoten (73) und den DCDC-Wandler (77) geschaltet ist,
wobei das lichtempfindliche Element (71) dazu konfiguriert ist, als Reaktion auf das Empfangen des Aufwecklichtsignals das weitere Schaltelement (78) leitend zu setzen, und
wobei der DCDC-Wandler (77) dazu konfiguriert ist, das Setzsignal an das Halteelement (76) auszugeben, während er mit dem Leistungsversorgungsknoten (73) verbunden ist.

6. Steuerungssystem (60) nach Anspruch 5, wobei das Schaltelement (75) zwischen den Leistungsversorgungsknoten (73) und den DCDC-Wandler (77) geschaltet ist und wobei der DCDC-Wandler (77) dazu konfiguriert ist, die Betriebsspannung an die Empfängerschaltung (74) auszugeben.

7. Steuerungssystem (60) nach einem der Ansprüche 2 bis 6, wobei ein Rücksetzsignal für das Halteelement (76) ein Schlafsignal ist und wobei das Schaltelement (75) dazu konfiguriert ist, als Reaktion auf das Empfangen des Schlafsignals die Empfängerschaltung (74) von dem Leistungsversorgungsknoten (73) oder von dem lichtempfindlichen Element (71) zu trennen.

8. Steuerungssystem (60) nach Anspruch 7, wobei das Rücksetzsignal von der Empfängerschaltung (74) erzeugt wird.

9. Steuerungssystem (60) nach einem der vorhergehenden Ansprüche, ferner umfassend einen Zähler (79), der dazu konfiguriert ist, als Reaktion auf das Aufwecksignal mit dem Zählen zu beginnen und als Reaktion auf ein vorbestimmtes Empfangssignal das Zählen zu beenden.

10. Steuerungssystem (60) nach den Ansprüchen 5 und 9, wobei der Zähler (79) dazu konfiguriert ist, als Reaktion darauf, dass das Schaltelement (75) leitend gesetzt wird, mit dem Zählen zu beginnen.

11. Steuerungssystem (60) nach Anspruch 10, ferner umfassend einen Kondensator (80), der mit dem Leistungsversorgungsknoten (73) verbunden ist, wobei das lichtempfindliche Element (71) dazu konfiguriert ist, das weitere Schaltelement (78) als Reaktion darauf leitend zu setzen, dass das Aufwecklichtsignal empfangen wird und der Kondensator (80) vollständig geladen ist.

12. Batteriesystem (50), umfassend
eine Vielzahl von Batteriemodulen (23), die jeweils eine Vielzahl von gestapelten Batteriezellen und eine Batteriemodulüberwachungseinrichtung, BMM (20), zum Überwachen der Zellen umfassen;
eine Batteriesystemüberwachungseinrichtung, BSM (10), die zum Steuern der BMM (20) jedes Batteriemoduls (23) konfiguriert ist; und
ein Steuerungssystem (60) nach einem der Ansprüche 1 bis 9, mit der BSM (10) als Master-Steuereinheit (61) und den BMMs (20) als Slave-Steuereinheiten (70).

13. Verfahren zum Aufwecken mindestens einer Slave-Steuereinheit (70) des Steuerungssystems (60) nach Anspruch 9, wobei das Verfahren die folgenden Schritte umfasst:
Empfangen (S91), über das lichtempfindliche Element (71), eines Aufwecklichtsignals von der Lichtquelle (62) und Erzeugen eines Aufwecksignals als Reaktion auf das Empfangen des Aufwecklichtsignals;
als Reaktion auf das Aufwecksignal Beginnen (S92), durch den Zähler (79), des Zählens und Verbinden (S92), durch die Aufweckeinheit (72), der Empfängerschaltung (74) mit dem Leistungsversorgungsknoten (73) und/oder dem lichtempfindlichen Element (71);
Beenden (S93), durch den Zähler (79), des Zählens als Reaktion auf ein vorbestimmtes Empfangssignal, das als Reaktion auf das Empfangen, über das lichtempfindliche Element (71), eines Lichtsignals, das sich von dem Aufwecklichtsignal unterscheidet, von dem lichtempfindlichen Element (71) an die Empfängerschaltung (74) ausgegeben wird.

14. Verfahren nach Anspruch 13 zum Aufwecken einer Vielzahl von Slave-Steuereinheiten (70) des Steuerungssystems (60) nach Anspruch 11,
wobei das erste Lichtsignal zu einem ersten Zeitpunkt für eine erste Dauer übertragen wird,
wobei in jeder Slave-Steuereinheit (70) das Aufwecksignal zu einem zweiten Zeitpunkt während der ersten Dauer ausgegeben wird, wenn der Kondensator (80) der jeweiligen Slave-Steuereinheit (70) vollständig geladen ist, und
wobei das zweite Lichtsignal zu einem dritten Zeitpunkt nach der ersten Dauer übertragen wird.

15. Verfahren nach Anspruch 14, wobei für jede Slave-Steuereinheit (70) eine zweite Dauer zwischen dem ersten Zeitpunkt und dem zweiten Zeitpunkt von einem Abstand der Slave-Steuereinheit (70) zu der Master-Steuereinheit (61) abhängt und eine Kennung der Slave-Steuereinheit (70) basierend auf der zweiten Dauer bestimmt wird.

## Revendications

1. Système de commande (60) pour un système de batterie (50), comportant une unité de commande maître (61) et au moins une unité de commande esclave (70) configurées pour réaliser une communication basée sur la lumière entre elles, dans lequel :
l'unité de commande maître (61) comporte une source de lumière (62) et un dispositif de commande de transmission (63), le dispositif de commande de transmission étant configuré pour :
coder un signal de transmission, pour émettre le signal de transmission en le modulant en au moins un signal lumineux et pour actionner la source de lumière (62) pour émettre l'au moins un signal lumineux, et
commander la source de lumière (62) pour émettre un signal de réveil par l'intermédiaire d'un signal lumineux de réveil, et
l'au moins une unité de commande esclave (70) comporte un élément photosensible (71), une unité de réveil (72), un nœud d'alimentation électrique (73) et un circuit récepteur (74),
dans lequel, pendant un mode de fonctionnement normal, le circuit récepteur (74) est connecté à l'élément photosensible (71) et au nœud d'alimentation électrique (73) et dans lequel, pendant un mode veille, le circuit récepteur (74) est déconnecté d'au moins l'un de l'élément photosensible (71) et du nœud d'alimentation électrique (73),
dans lequel l'élément photosensible (71) est configuré pour recevoir des signaux lumineux émis par la source de lumière (62) et pour envoyer un signal de réveil à l'unité de réveil (72) en réponse à la réception du signal lumineux de réveil et pour envoyer un signal de réception au circuit récepteur (74) en réponse à la réception de l'au moins un signal lumineux,
dans lequel l'unité de réveil (72), en réponse à la réception du signal de réveil, est configurée pour connecter le circuit récepteur (74) à l'au moins un du nœud d'alimentation électrique (73) et de l'élément photosensible (71) déconnecté afin de passer du mode veille au mode de fonctionnement normal, et
dans lequel le circuit récepteur (74), en mode de fonctionnement normal, est configuré pour recevoir une tension de fonctionnement du nœud d'alimentation électrique (73) et pour recevoir le signal de réception de l'élément photosensible (71) et pour démoduler et décoder le signal de réception.

2. Système de commande (60) selon la revendication 1, dans lequel l'unité de réveil (72) comporte un élément de commutation (75) et un élément de verrouillage (76),
dans lequel l'élément photosensible (71) est configuré pour envoyer un signal d'initialisation en tant que signal de réveil à l'élément de verrouillage (76) en réponse à la réception du signal lumineux de réveil,
dans lequel l'élément de verrouillage (76) est configuré pour commander l'élément de commutation (75) afin qu'il soit conducteur en réponse à la réception du signal d'initialisation de l'élément photosensible (71), et
dans lequel l'élément de commutation (75) est interconnecté entre le circuit récepteur (74) et l'un de l'élément photosensible (71) et du nœud d'alimentation électrique (73).

3. Système de commande (60) selon la revendication 2, dans lequel l'autre parmi l'élément photosensible (71) et le nœud d'alimentation électrique (73) est connecté à demeure au circuit récepteur (74).

4. Système de commande (60) selon la revendication 2 ou 3, dans lequel le nœud d'alimentation électrique (73) est connecté au circuit récepteur (74) par l'intermédiaire d'un convertisseur CC-CC (77) et l'élément photosensible (71) est connecté à l'élément de verrouillage (76) par l'intermédiaire du convertisseur CC-CC (77).

5. Système de commande (60) selon la revendication 4,
dans lequel l'unité de réveil (72) comporte un autre élément de commutation (78) interconnecté entre le nœud d'alimentation électrique (73) et le convertisseur CC-CC (77),
dans lequel l'élément photosensible (71) est configuré pour régler l'autre élément de commutation (78) sur conducteur en réponse à la réception du signal lumineux de réveil, et
dans lequel le convertisseur CC-CC (77) est configuré pour envoyer le signal d'initialisation à l'élément de verrouillage (76), tout en étant connecté au nœud d'alimentation électrique (73).

6. Système de commande (60) selon la revendication 5, dans lequel l'élément de commutation (75) est interconnecté entre le nœud d'alimentation électrique (73) et le convertisseur CC-CC (77) et dans lequel le convertisseur CC-CC (77) est configuré pour fournir la tension de fonctionnement au circuit récepteur (74).

7. Système de commande (60) selon l'une quelconque des revendications 2 à 6, dans lequel un signal de réinitialisation pour l'élément de verrouillage (76) est un signal de veille, et dans lequel l'élément de commutation (75) est configuré pour déconnecter le circuit récepteur (74) du nœud d'alimentation électrique (73) ou de l'élément photosensible (71) en réponse à la réception du signal de veille.

8. Système de commande (60) selon la revendication 7, dans lequel le signal de réinitialisation est généré à partir du circuit récepteur (74).

9. Système de commande (60) selon l'une quelconque des revendications précédentes, comportant en outre un compteur (79) configuré pour commencer à compter en réponse au signal de réveil et pour arrêter de compter en réponse à un signal de réception prédéterminé.

10. Système de commande (60) selon les revendications 5 et 9, dans lequel le compteur (79) est configuré pour commencer à compter en réponse au réglage sur conducteur de l'élément de commutation (75).

11. Système de commande (60) selon la revendication 10, comportant en outre un condensateur (80), connecté au nœud d'alimentation électrique (73), dans lequel l'élément photosensible (71) est configuré pour régler l'autre élément de commutation (78) sur conducteur en réponse à la réception du signal lumineux de réveil et à la pleine charge du condensateur (80).

12. Système de batterie (50), comportant :
une pluralité de modules de batterie (23), chacun comportant une pluralité d'éléments de batterie empilés et un dispositif de surveillance de module de batterie, BMM (20), destiné à surveiller les éléments ;
un dispositif de surveillance de système de batterie, BSM (10), configuré pour commander le BMM (20) de chaque module de batterie (23) ; et
un système de commande (60) selon l'une quelconque des revendications 1 à 9, le BSM (10) étant l'unité de commande maître (61) et les BMM (20) étant les unités de commande esclaves (70).

13. Procédé de réveil d'au moins une unité de commande esclave (70) du système de commande (60) selon la revendication 9, le procédé comportant les étapes de :
réception (S91), par l'intermédiaire de l'élément photosensible (71), d'un signal lumineux de réveil provenant de la source de lumière (62) et génération, en réponse à la réception du signal lumineux de réveil, d'un signal de réveil ;
démarrage (S92) par le compteur (79), en réponse au signal de réveil, du comptage et connexion (S92), par l'unité de réveil (72), du circuit récepteur (74) au nœud d'alimentation électrique (73) et/ou à l'élément photosensible (71) ;
arrêt (S93), par le compteur (79), du comptage en réponse à l'envoi d'un signal de réception prédéterminée de l'élément photosensible (71) au circuit récepteur (74) en réponse à la réception, par l'intermédiaire de l'élément photosensible (71), d'un signal lumineux différent du signal lumineux de réveil.

14. Procédé selon la revendication 13 de réveil d'une pluralité d'unités de commande esclaves (70) du système de commande (60) selon la revendication 11,
dans lequel le premier signal lumineux est émis à un premier instant pendant une première durée,
dans lequel, dans chaque unité de commande esclave (70), le signal de réveil est émis à un deuxième instant pendant la première durée lorsque le condensateur (80) de l'unité de commande esclave (70) respective est complètement chargé, et
dans lequel le deuxième signal lumineux est émis à un troisième instant après la première durée.

15. Procédé selon la revendication 14, dans lequel, pour chaque unité de commande esclave (70), une deuxième durée entre le premier instant et le deuxième instant dépend d'une distance de l'unité de commande esclave (70) à l'unité de commande maître (61) et un identifiant de l'unité de commande esclave (70) est déterminé sur la base de la deuxième durée.
